# EUROPEAN PATENT SPECIFICATION

(11) **EP 3 190 570 B1**
(45) Date of publication and mention of the grant of the patent: **25.08.2021**
(21) Application number: 15837463.7
(22) Date of filing: 04.09.2015
(51) Int. Cl.: G08B 17/00, G08B 5/00, G08B 7/06

(54) **PASSENGER EVACUATION DIRECTION GUIDANCE SYSTEM**
FAHRGASTEVAKUIERUNGSRICHTUNGSLEITSYSTEM
SYSTÈME DE GUIDAGE DE DIRECTION D'ÉVACUATION DE PASSAGERS

(30) Priority: 05.09.2014 KR 20140118877
(43) Date of publication of application: 12.07.2017
(73) Proprietor: GOtec Inc., Gyeonggi-do, (KR); Cho, Hyun Bo, Gyeonggi-do 15535, (KR)
(72) Inventor: CHO, Huyn Bo, Gyeonggi-do 15535 (KR)
(74) Representative: dompatent von Kreisler Selting Werner - Partnerschaft von Patent- und Rechtsanwälten mbB
(86) International application number: PCT/KR2015/009377
(87) International publication number: WO 2016/036208

(56) References cited:
- EP-A1- 2 596 976
- EP-A1- 2 738 060
- WO-A1-2012/084184
- WO-A2-2005/079340
- WO-A2-2006/018304
- KR-A- 20050 020 886
- KR-A- 20110 059 161
- KR-A- 20110 059 161
- KR-A- 20130 062 067
- KR-A- 20130 062 067
- KR-A- 20130 109 349
- KR-A- 20130 109 349
- KR-A- 20140 073 612
- KR-A- 20140 073 612
- US-A1- 2009 151 210
- US-A1- 2009 151 210
- US-A1- 2011 157 486
- US-B1- 6 181 251
- Huawei ET AL: "Huawei Digital Railway Solution Contents", , 16 September 2012 (2012-09-16), pages 1-27, XP055138080, Retrieved from the Internet: URL:http://enterprise.huawei.com/ilink/cne nterprise/download/HW_261799 [retrieved on 2014-09-03]
- None

## Description

### [Technical Field]

The present invention relates to a passenger evacuation direction guidance system, and particularly, to a passenger evacuation direction guidance system capable of easily evacuating passengers to a safe place from a disaster or an accident occurring during a train service.

### [Background Art]

Trains, including subway trains or railway trains, have been operated as an alternative for solving traffic congestion in metropolitan areas, and subway or railway lines have been consistently extended.

Because the train travels in tunnels, which are underground spaces, for a long period of time, and travels often at night, there is a need for a guidance system for safely evacuating passengers from a disaster or an accident occurring in the tunnel or on a traveling route.

Furthermore, because it is difficult for the passengers to ensure visibility at night or at a dark place such as a tunnel where light does not enter from the outside, the passengers cannot recognize an evacuation route to a safe place, and as a result, an importance of the guidance system is further emphasized.

In the related art, emergency exit lamps are just installed in the tunnel, thereby guiding the passengers to a safe place from a disaster and an accident.

However, the method causes the passengers to suffer from a difficulty in finding the emergency exit guide lamps in an urgent situation, and the passenger cannot recognize a direction that guides the passengers to a place closest to the emergency exit from the current positions of the passengers, and as a result, there is a problem in that it is impossible to efficiently evacuate the passengers to the safe place.

Moreover, because due to the structure of the train, evacuation directions, in which the passengers exit through a plurality of doors, are different in accordance with a disaster or accident occurrence point, there is a limitation in informing the passengers, who exit through doors of a subway train or a railway train, of the evacuation direction only by using guide light such as the emergency exit guide lamps, and seriously, there is a problem in that a loss of life may be increased due to misjudgments of the passengers.

Therefore, the present applicant has developed the present invention in order to solve the above problems, and as literature of related art, there is Korean Patent No. 10-0547919 (entitled 'Emergency Escape Guide Apparatus').

WO 2012/084184 discloses a passenger evacuation guidance system according to the preamble of claim 1. KR 2013 0109349 A discloses a further vehicle evacuation and guidance system.

### [Disclosure]

### [Technical Problem]

The present invention is defined by the appended claims and has been made in an effort to solve the above problems, and an object of the present invention is to provide an evacuation direction guidance system capable of efficiently informing passengers, who exit through each door of a train, of an evacuation direction when a disaster or an accident occurs on a traveling route of the train.

### [Technical Solution]

The present invention includes: an evacuation direction generation unit which generates passenger evacuation direction information for passengers in a train when a disaster or an accident occurs on a traveling route of the train; and an evacuation direction display unit which receives the passenger evacuation direction information generated by the evacuation direction generation unit, and displays a passenger evacuation direction on an object positioned at the periphery of the train.

According to the present invention the evacuation direction display unit includes an evacuation direction indicating module which is installed on the train so as to be moved together with the train and indicates the passenger evacuation direction on the object by emitting light toward the object.

According to the present invention the evacuation direction display unit further includes an object detection module for detecting a position of the object.

The evacuation direction display unit further includes a focal point adjusting module which calculates a focal length between the object and the evacuation direction indicating module based on the position of the object detected by the object detection module, and adjusts clarity of the indication of the passenger evacuation direction.

In addition, the object may be at least one of a wall surface, a floor surface, and a ceiling surface positioned at the periphery of the train.

In addition, the evacuation direction indicating module may be installed on a door of the train or at a position adjacent to the door.

In addition, the evacuation direction display unit may further include an angle adjusting module which adjusts an indication angle of the evacuation direction indicating module in accordance with a position of the object.

In addition, the passenger evacuation direction may be indicated by an arrow indicating the evacuation direction or a route map indicating an evacuation route from the current positions of the passengers to a safe place.

In addition, the evacuation direction display unit may further include a voice output module which informs the passengers of the position of the object by voice, and the voice output module may inform the passengers of the passenger evacuation direction by voice when there is no object on which the passenger evacuation direction is indicated or when the object is not appropriate.

In addition, the order of the objects to be detected by the object detection module may be determined according to the ability of the object of enabling the passengers to easily recognize the passenger evacuation direction indicated by the evacuation direction indicating module when the passengers in the train exit through the doors to the outside of the train, and a wall surface, a floor surface, and a ceiling surface may be determined in priority order.

### [Advantageous Effects]

According to the present invention, it is possible to quickly provide a safe evacuation route to the passengers who exit through the doors of the train when a disaster or an accident occurs on a traveling route of the train.

In addition, according to the present invention, the evacuation direction control unit is provided at each of the doors through which the passengers exit, and as a result, it is possible to multifariously provide the passengers with an evacuation route from the current positions of the passengers to a safe place, thereby preventing confusion caused by an evacuation situation.

In addition, according to the present invention, it is possible to efficiently provide the evacuation route to the passengers even in a lightless tunnel or at night.

### [Description of Drawings]

FIG. 1 is a block diagram illustrating a configuration of a passenger evacuation direction guidance system according to an exemplary embodiment of the present invention.
FIG. 2 is a block diagram illustrating a detailed configuration of an evacuation direction control unit according to the exemplary embodiment of the present invention.
FIG. 3 is a view schematically illustrating a state in which a passenger evacuation direction is indicated on a wall surface by the evacuation direction control unit according to the exemplary embodiment of the present invention.
FIG. 4 is a view illustrating implemented examples of passenger evacuation direction signs outputted by an evacuation direction indicating unit according to the exemplary embodiment of the present invention.
FIG. 5 is a cross-sectional view illustrating a state in which the evacuation direction control unit according to the exemplary embodiment of the present invention is provided on each door of a train, when viewed from the top side.

### [Best Mode]

Advantages and features of the present invention and methods of achieving the advantages and features will be clear with reference to exemplary embodiments described in detail below together with the accompanying drawings.

However, the present invention is not limited to exemplary embodiment disclosed herein but will be implemented in various forms. The exemplary embodiments are provided so that the present invention is completely disclosed, and a person of ordinary skilled in the art can fully understand the scope of the present invention. Therefore, the present invention will be defined only by the scope of the appended claims.

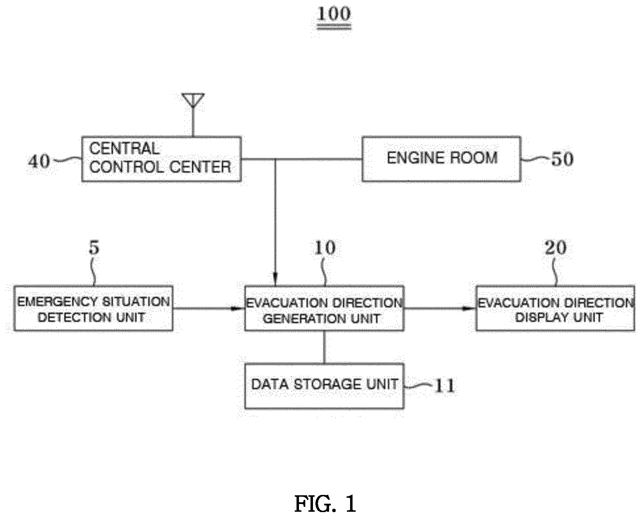

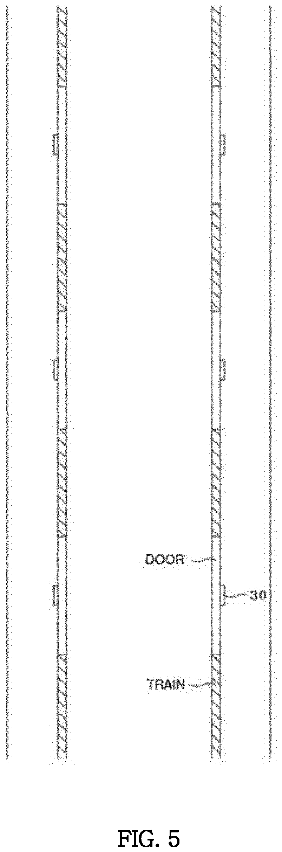

Hereinafter, a passenger evacuation direction guidance system according to an exemplary embodiment of the present invention will be described with reference to FIGS. 1 to 5. In the description of the present invention, the specific descriptions of publicly known related function or configurations will be omitted in order to prevent the specific descriptions from obscuring the subject matter of the present invention.

A passenger evacuation direction guidance system 100 according to an exemplary embodiment of the present invention is a system for guiding an evacuation direction so as to safely evacuate passengers from a disaster or an accident occurring in a train or on a traveling route of the train during a train service, and the passenger evacuation direction guidance system 100 may include an evacuation direction generation unit 10 which generates passenger evacuation direction information for passengers in the train when a disaster or an accident occurs on a traveling route of the train, and an evacuation direction display unit 20 which receives the passenger evacuation direction information generated by the evacuation direction generation unit 10 and displays a passenger evacuation direction on an object positioned at the periphery of the train.

As illustrated in FIG. 1, the evacuation direction generation unit 10 may receive an emergency situation detection signal from an emergency situation detection unit 5 that determines the occurrence of a disaster or an accident on a traveling route of the train or in the train.

The emergency situation detection unit 5 may be implemented by a plurality of surveillance cameras, fire detecting sensors, or the like provided on the traveling route or in the train in order to detect a disaster or an accident occurring on the traveling route of the train or in the train. That is, the surveillance camera or the fire detecting sensor may detect the occurrence of a disaster or an accident on the traveling route of the train or in the train in real time, and when a disaster or an accident occurs, the surveillance camera or the fire detecting sensor may transmit an emergency situation detection signal, including position information of a disaster or accident occurrence point, to the evacuation direction generation unit 10.

For reference, in the exemplary embodiment of the present invention, it is described that a disaster or an accident occurring on the traveling route of the train may be detected by using the surveillance camera or the fire detecting sensor, but the present invention is not limited thereto, and various publicly known detection systems, or the like may be used to detect a disaster, an accident, or the like in real time. In addition, it is described that the evacuation direction generation unit 10 receives the emergency situation detection signal from the emergency situation detection unit 5, but the present invention is not limited thereto. That is, the evacuation direction generation unit 10 may receive an emergency situation detection signal from a central control center 40 or an engine room 50.

Further, the evacuation direction generation unit 10 is connected to a data storage unit 11 which stores a plurality of space databases and a plurality of passageway databases in respect to spaces and passageways provided in a station building or on the traveling route of the train so that the passengers in the train may move to a safe place such as an emergency exit while avoiding the disaster or accident occurrence point.

That is, the evacuation direction generation unit 10 may receive the position information of the disaster or accident occurrence point from any one of the emergency situation detection unit 5, the central control center 40, and the engine room 50, may extract space information and passageway information at the disaster or accident occurrence point from the data storage unit 11, and may generate evacuation direction information from the disaster or accident occurrence point to the safe place.

The evacuation direction display unit 20 receives the passenger evacuation direction information, which is generated by the evacuation direction generation unit 10 as described above, and may provide the passengers in the train with a passenger evacuation direction so that the passengers may move to the safe place.

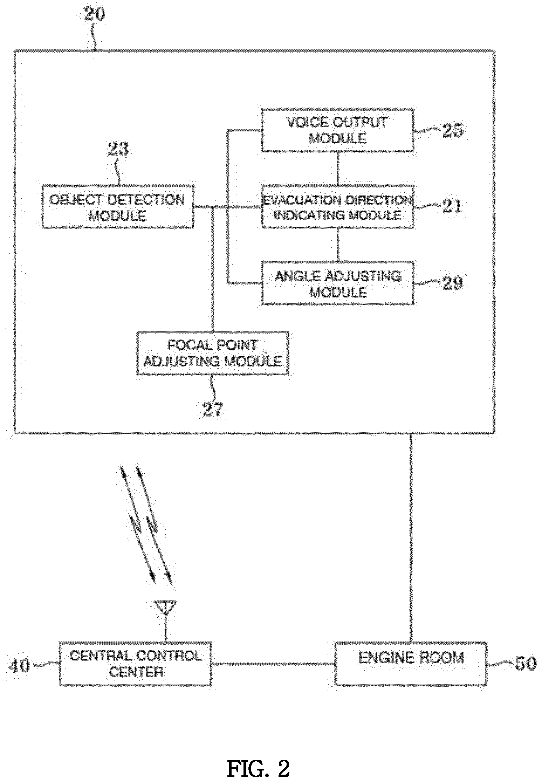

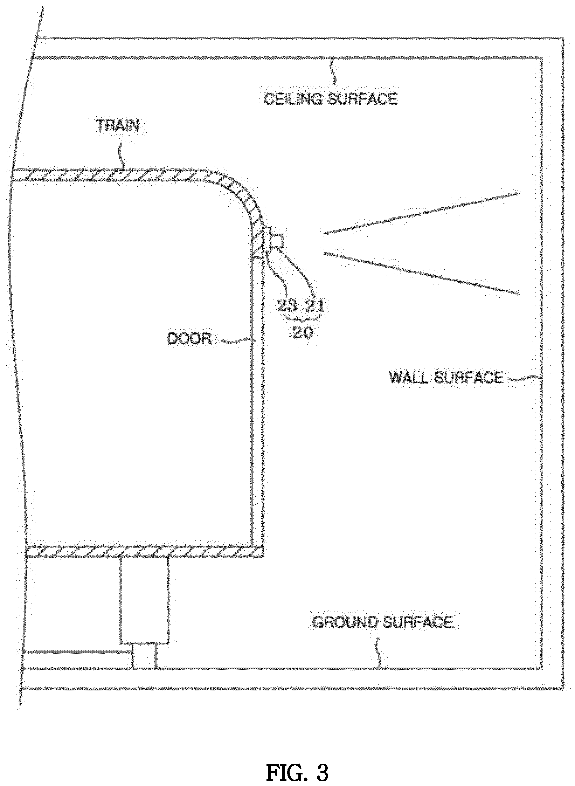

Further, as illustrated in FIGS. 2 and 3, the evacuation direction display unit 20 may include an evacuation direction indicating module 21 which is installed on the train and indicates the passenger evacuation direction on an object by emitting light toward the object.

The evacuation direction indicating module 21 may be installed on each of a plurality of doors provided on the train or at a position adjacent to each of the doors. The reason is that the plurality of doors is typically provided in a longitudinal direction of the train, and as a result, the passengers may exit the plurality of doors in different evacuation directions when a disaster or an accident occurs.

Therefore, the evacuation direction display unit 21 may provide the passengers, who exit each of the plurality of doors, with safe passenger evacuation directions that indicate evacuation directions which guide the passengers to places closest to safe places in consideration of the current positions of the passengers and the disaster or accident occurrence point.

Further, the evacuation direction indicating module 21 may be implemented by an imaging device such as a beam projector or a laser projector.

Therefore, the evacuation direction display unit 20 may provide the passengers, who exit each of the plurality of doors, with safe passenger evacuation directions that indicate evacuation directions which guide the passengers to places closest to safe places in consideration of the current positions of the passengers and the disaster or accident occurrence point.

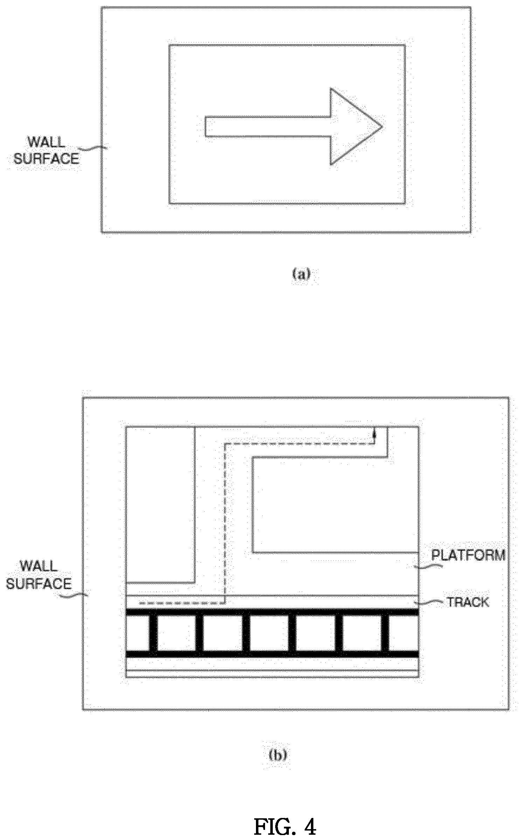

Further, based on the passenger evacuation direction information generated by the evacuation direction generation unit 10, the passenger evacuation direction indicated by the evacuation direction indicating module 21 may be implemented by an arrow that indicates an evacuation direction in one direction toward a safe place while avoiding the disaster or accident occurrence point, as illustrated in FIG. 4A, and the passenger evacuation direction may be implemented by a route map of the disaster or accident occurrence point which indicates an evacuation route from the current positions of the passengers to the safe place by multi-directional arrows, as illustrated in FIG. 4B.

Further, the evacuation direction display unit 20 may include an object detection module 23 for detecting a position of the object.

The object to be detected by the object detection module 23 may preferably be any one of a tunnel wall surface, a floor surface, and a ceiling surface on the traveling route of the train so that the passenger evacuation direction indicated by the evacuation direction indicating module 21 may be easily recognized by the passengers with the naked eye. That is, the object to be detected by the object detection module 23 serves as a screen onto which the passenger evacuation direction indicated by the evacuation direction indicating module 21 is outputted.

Further, the order of the objects to be detected by the object detection module 23 is determined according to the ability of the object of enabling the passengers to easily recognize the passenger evacuation direction indicated by the evacuation direction indicating module 21 when the passengers in the train exit through the doors to the outside of the train, and a wall surface, a floor surface, and a ceiling surface may be determined in priority order.

For example, the object to be the object detection module 23 is determined as the wall surface, the passengers, who exit through the doors, may naturally recognize the passenger evacuation direction indicated on the wall surface that faces the passengers. However, in a case in which there is no wall surface on the traveling route of the train or the wall surface is distant from the train, the object detection module 23 may detect the floor surface and the ceiling surface in the order.

For reference, the reason why the floor surface is preferentially detected than the ceiling surface is that the passengers, who exit through the doors to the outside of the train, may more easily recognize, with the naked eye, the passenger evacuation direction outputted onto the floor surface than the passenger evacuation direction outputted onto the ceiling surface.

In addition, the evacuation direction display unit 20 may further include a voice output module 25 that informs, by voice, the passengers of a position of the object onto which the passenger evacuation direction is indicated.

For example, in a case in which the evacuation direction indicating module 21 indicates the passenger evacuation direction on the wall surface detected by the object detection module 23, the voice output module 25 may output a voice that guides the passengers, who exit through the doors of the train, so as to allow the passengers to look at the wall surface.

Further, in a case in which there is no object to be detected by the object detection module 23, the object is distant from the object detection module 23, or the object cannot be detected due to a malfunction of the object detection module 23, the voice output module 25 may indicate the evacuation direction, by voice, to the passengers based on the evacuation direction information generated by the evacuation direction generation unit 10. For example, the voice output module 25 may output a voice that instructs the passengers, who exit through the doors to the outside of the train, to move to the left or right, thereby guiding the passengers to an evacuation route.

In addition, the evacuation direction display unit 20 may further include a focal point adjusting module 27 which calculates a focal length between the object and the evacuation direction indicating module 21 based on the position of the object detected by the object detection module 23, and thus adjusts clarity of the indication of the passenger evacuation direction.

The focal point adjusting module 27 prevents the passenger evacuation direction indicated on the object from being indicated on the object in a blurred state, thereby enabling the passengers, who exit through the doors of the train, to recognize the passenger evacuation direction in a clear state. If the passenger evacuation direction is indicated on the object in a blurred state, the passengers cannot accurately recognize the evacuation direction, and may suffer from a difficulty in moving to a safe place.

Further, the evacuation direction display unit 20 may further include an angle adjusting module 29 which adjusts an indication angle of the evacuation direction indicating module 21 so as to correspond to the position of the object.

To adjust the indication angle of the passenger evacuation direction outputted from the evacuation direction indicating module 21, the angle adjusting module 29 may receive the position information of the object detected by the object detection module 23, and may adjust up, down, left, and right angles of the evacuation direction indicating module 21.

For reference, the configuration in which the evacuation direction indicating module 21 is rotated in up, down, left, and right directions by the angle adjusting module 29 may be implemented by using a rotating device such as a linear motor, and because this configuration is a publicly known configuration widely used in general industrial fields, a specific description thereof will be omitted from the specification of the present invention.

Further, the evacuation direction display unit 20 may be directly controlled by a safety manager or an engineer in the central control center 40 in the station building or in the engine room 50 in the train. That is, the passenger evacuation direction may be provided to the passengers by directly controlling the evacuation direction indicating module 21 of the evacuation direction display unit 20 from the central control center 40 or the engine room 50.

The passenger evacuation direction guidance system 100 according to the exemplary embodiment of the present invention, which is configured as described above, may quickly provide a safe evacuation route to the passengers, who exit through the doors of the train when a disaster or an accident occurs on the traveling route of the train.

In addition, according to the passenger evacuation direction guidance system 100 of the present invention, the evacuation direction display unit 20 is provided at each of the doors through which the passengers exit, and as a result, it is possible to multifariously provide the passengers with an evacuation route from the current positions of the passengers to a safe place, thereby preventing confusion caused by an evacuation situation.

While the specific exemplary embodiments according to the present invention have been described above, the exemplary embodiments may be modified to various exemplary embodiments without departing from the scope of the present invention.

Therefore, the scope of the present invention should not be limited to the described exemplary embodiments, and should be defined by not only the claims to be described below, but also equivalents to the claims.

### [Industrial Applicability]

The present invention may be used for a passenger safety management system in transportation industries such as a subway industry or a railway industry for transporting a larger number of passengers.

## Claims

1. A passenger evacuation direction guidance system (100) comprising:
an evacuation direction generation unit (10) connected to a data storage unit (11) configured to store a plurality of space databases and a plurality of passageway databases in respect to spaces and passageways provided in a station building or on the travelling route of a train, the evacuation direction generation unit (10) is configured to receive an emergency situation detection signal from a central control centre (40) or an engine room (50) or an emergency detection unit (5), the evacuation direction generation unit (10) is configured to generate passenger evacuation direction information for passengers in a train when a disaster or an accident occurs on a traveling route of the train; and
an evacuation direction display unit (20) configured to receive the passenger evacuation direction information generated by the evacuation direction generation unit (10), and displays a passenger evacuation direction on an object positioned at the periphery of the train,
**characterized in that**
the evacuation direction display unit (20) includes an evacuation direction indicating module (21) which is installed on the train and indicates the passenger evacuation direction on the object by emitting light toward the object,
wherein the evacuation direction display unit (20) further includes an object detection module (23) configured to detect a position of the object, and wherein the evacuation direction display unit (20) further includes a focal point adjusting module (27) configured to calculate a focal length between the object and the evacuation direction indicating module (21) based on the position of the object detected by the object detection module (23), and thus adjusts clarity of the indication of the passenger evacuation direction.

2. The passenger evacuation direction guidance system according to claim 1, wherein the object is at least one of a wall surface, a floor surface, and a ceiling surface positioned at the periphery of the train.

3. The passenger evacuation direction guidance system according to claim 1, wherein the evacuation direction indicating module (21) is installed on a door of the train or at a position adjacent to the door.

4. The passenger evacuation direction guidance system according to claim 1, wherein the evacuation direction display unit (20) further includes an angle adjusting module (29) configured to adjust an indication angle of the evacuation direction indicating module (21) in accordance with a position of the object.

5. The passenger evacuation direction guidance system according to claim 1, wherein the passenger evacuation direction is indicated by an arrow indicating the evacuation direction or a route map indicating an evacuation route from the current positions of the passengers to a safe place.

6. The passenger evacuation direction guidance system according to claim 1, wherein the evacuation direction display unit (20) further includes a voice output module (25) configured to inform the passengers of the position of the object by voice, and the voice output module (25) configured to inform the passengers of the passenger evacuation direction by voice when there is no object on which the passenger evacuation direction is indicated or when the object is not appropriate.

7. The passenger evacuation direction guidance system according to claim 1, wherein the order of the objects to be detected by the object detection module (23) is determined according to the ability of the object of enabling the passengers to easily recognize the passenger evacuation direction indicated by the evacuation direction indicating module (21) when the passengers in the train exit through the doors to the outside of the train, and a wall surface, a floor surface, and a ceiling surface is determined in priority order.

## Patentansprüche

1. Fahrgastevakuierungsrichtungs-Leitsystem (100), das aufweist:
eine Evakuierungsrichtungs-Erzeugungseinheit (10), die mit einer Datenspeichereinheit (11) verbunden ist, die derart ausgebildet ist, dass sie eine Vielzahl von Raum-Datenbeständen und eine Vielzahl von Durchgangs-Datenbeständen in Bezug auf Räume und Durchgänge, die in einem Stationsgebäude oder auf einer Fahrstrecke eines Zugs vorgesehen sind, speichert, wobei die Evakuierungsrichtungs-Erzeugungseinheit (10) derart ausgebildet ist, dass sie ein Notsituations-Detektionssignal aus einem zentralen Kontrollraum (40) oder einem Motorraum (50) oder einer Notdetektionseinheit (5) empfängt, wobei die Evakuierungsrichtung-Erzeugungseinheit (10) derart ausgebildet ist, dass sie Fahrgasevakuierungsrichtungs-Informationen für Fahrgäste in einem Zug erzeugt, wenn eine Katastrophe oder ein Unfall auf einer Fahrstrecke des Zugs auftritt; und
eine Evakuierungsrichtungs-Anzeigeeinheit (20), die derart ausgebildet ist, dass sie die von der Evakuierungsrichtungs-Erzeugungseinheit (10) erzeugten Fahrgastevakuierungsrichtungs-Informationen empfängt und eine Fahrgastevakuierungsrichtung auf einem Objekt anzeigt, das an der Peripherie des Zugs positioniert ist,
**dadurch gekennzeichnet, dass**
die Evakuierungsrichtungs-Anzeigeeinheit (20) ein Evakuierungsrichtungs-Angabemodul (21) aufweist, das am Zug installiert ist und durch Emittieren von Licht in Richtung des Objekts die Fahrgastevakuierungsrichtung auf dem Objekt angibt,
wobei die Evakuierungsrichtungs-Anzeigeeinheit (20) ferner ein Objektdetektionsmodul (23) aufweist, das derart ausgebildet ist, dass es eine Position des Objekts detektiert, und wobei die Evakuierungsrichtungs-Anzeigeeinheit (20) ferner ein Brennpunkt-Einstellmodul (27) aufweist, das derart ausgebildet ist, dass es eine Brennweite zwischen dem Objekt und dem Evakuierungsrichtungs-Angabemodul (21) auf der Basis der Position des von dem Objektdetektionsmodul (23) detektierten Objekts berechnet und somit die Eindeutigkeit der Fahrgastevakuierungsrichtung einstellt.

2. Fahrgastevakuierungsrichtungs-Leitsystem nach Anspruch 1, bei dem das Objekt eine Wandfläche, eine Bodenfläche und/oder eine Deckenfläche ist, die an der Peripherie des Zugs positioniert sind.

3. Fahrgastevakuierungsrichtungs-Leitsystem nach Anspruch 1, bei dem das Evakuierungsrichtungs-Angabemodul (21) an einer Tür des Zugs oder an einer an die Tür angrenzenden Position installiert ist.

4. Fahrgastevakuierungsrichtungs-Leitsystem nach Anspruch 1, bei dem die Evakuierungsrichtungs-Anzeigeeinheit (20) ferner ein Winkeleinstellmodul (29) aufweist, das derart ausgebildet ist, dass es einen Angabewinkel des Evakuierungsrichtungs-Angabemoduls (21) entsprechend einer Position des Objekts einstellt.

5. Fahrgastevakuierungsrichtungs-Leitsystem nach Anspruch 1, bei dem die Fahrgastevakuierungsrichtung von einem Pfeil, der die Evakuierungsrichtung angibt, oder eine Streckenkarte, die eine Evakuierungsstrecke von den aktuellen Positionen der Fahrgäste zu einem sicheren Ort angibt, angegeben wird.

6. Fahrgastevakuierungsrichtungs-Leitsystem nach Anspruch 1, bei dem die Evakuierungsrichtungs-Anzeigeeinheit (20) ferner ein Sprachausgabemodul (25) aufweist, das derart ausgebildet ist, dass es die Fahrgäste mittels Sprache über die Position des Objekts informiert, und
das Sprachausgabemodul (25) derart ausgebildet ist, dass es die Fahrgäste mittels Sprache über die Fahrgastevakuierungsrichtung informiert, wenn es kein Objekt gibt, auf dem die Fahrgastevakuierungsrichtung angegeben ist, oder wenn das Objekt nicht geeignet ist.

7. Fahrgastevakuierungsrichtungs-Leitsystem nach Anspruch 1, bei dem die Reihenfolge der von dem Objektdetektionsmodul (23) zu detektierenden Objekte entsprechend der Fähigkeit des Objekts zum Ermöglichen, dass die Passagiere leicht die von dem Evakuierungsrichtungs-Angabemodul (21) angegebene Fahrgastevakuierungsrichtung erkennen, wenn die Fahrgäste den Zug durch die Türen aus dem Zug hinaus verlassen, bestimmt wird und eine Wandfläche, eine Bodenfläche und eine Deckenfläche in einer Prioritätsreihenfolge bestimmt werden.

## Revendications

1. Système de guidage de direction d'évacuation de passagers (100) comprenant :
une unité de génération de direction d'évacuation (10) connectée à une unité de stockage de données (11) configurée pour stocker une pluralité de bases de données d'espace et une pluralité de bases de données de passage par rapport à des espaces et des passages prévus dans un bâtiment de gare ou sur l'itinéraire de circulation d'un train, l'unité de génération de direction d'évacuation (10) est configurée pour recevoir un signal de détection de situation d'urgence en provenance d'un centre de commande central (40) ou d'un compartiment moteur (50) ou d'une unité de détection d'urgence (5), l'unité de génération de direction d'évacuation (10) est configurée pour générer des informations de direction d'évacuation de passagers pour des passagers dans un train lorsqu'une catastrophe ou un accident se produit sur un itinéraire de circulation du train ; et
une unité d'affichage de direction d'évacuation (20) configurée pour recevoir les informations de direction d'évacuation de passagers générées par l'unité de génération de direction d'évacuation (10), et affiche une direction d'évacuation de passagers sur un objet positionné à la périphérie du train,
**caractérisé en ce que**
l'unité d'affichage de direction d'évacuation (20) comporte un module d'indication de direction d'évacuation (21) qui est installé à bord du train et indique la direction d'évacuation de passagers sur l'objet en émettant de la lumière vers l'objet,
dans lequel l'unité d'affichage de direction d'évacuation (20) comporte en outre un module de détection d'objet (23) configuré pour détecter une position de l'objet, et dans lequel l'unité d'affichage de direction d'évacuation (20) comporte en outre un module d'ajustement de point focal (27) configuré pour calculer une longueur focale entre l'objet et le module d'indication de direction d'évacuation (21) d'après la position de l'objet détectée par le module de détection d'objet (23), et ajuste ainsi une netteté de l'indication de la direction d'évacuation de passagers.

2. Système de guidage de direction d'évacuation de passagers selon la revendication 1, dans lequel l'objet est au moins l'une d'une surface de paroi, d'une surface de sol, et d'une surface de plafond positionnée à la périphérie du train.

3. Système de guidage de direction d'évacuation de passagers selon la revendication 1, dans lequel le module d'indication de direction d'évacuation (21) est installé sur une porte du train ou à une position adjacente à la porte.

4. Système de guidage de direction d'évacuation de passagers selon la revendication 1, dans lequel l'unité d'affichage de direction d'évacuation (20) comporte en outre un module d'ajustement d'angle (29) configuré pour ajuster un angle d'indication du module d'indication de direction d'évacuation (21) en conformité avec une position de l'objet.

5. Système de guidage de direction d'évacuation de passagers selon la revendication 1, dans lequel la direction d'évacuation de passagers est indiquée par une flèche indiquant la direction d'évacuation ou une carte d'itinéraire indiquant un itinéraire d'évacuation depuis les positions actuelles des passagers jusqu'à un lieu sûr.

6. Système de guidage de direction d'évacuation de passagers selon la revendication 1, dans lequel l'unité d'affichage de direction d'évacuation (20) comporte en outre un module de sortie de voix (25) configuré pour informer les passagers de la position de l'objet par voix, et le module de sortie de voix (25) est configuré pour informer les passagers de la direction d'évacuation de passagers par voix lorsqu'il n'y a pas d'objet sur lequel la direction d'évacuation de passagers est indiquée ou lorsque l'objet n'est pas approprié.

7. Système de guidage de direction d'évacuation de passagers selon la revendication 1, dans lequel l'ordre des objets à détecter par le module de détection d'objet (23) est déterminé selon la capacité de l'objet à permettre aux passagers de reconnaître facilement la direction d'évacuation de passagers indiquée par le module d'indication de direction d'évacuation (21) lorsque les passagers dans le train sortent par les portes vers l'extérieur du train, et une surface de paroi, une surface de sol, et une surface de plafond sont déterminées par ordre de priorité.
